# EUROPEAN PATENT SPECIFICATION

(11) **EP 2 420 627 B1**
(45) Date of publication and mention of the grant of the patent: **11.11.2015**
(21) Application number: 10181330.1
(22) Date of filing: 28.09.2010
(51) Int. Cl.: E03B 11/02, E03B 11/04

(54) **Water storage tank**
Wasserspeichertank
Réservoir de stockage d'eau

(30) Priority: 18.08.2010 KR 20100079670
(43) Date of publication of application: 22.02.2012
(73) Proprietor: Woongjin Coway Co., Ltd., Choongcheongnam-do 314-895 (KR)
(72) Inventor: Kim, Dong Eun, 151-851, SEOUL (KR); Noh, Jin Hwan, 151-851, SEOUL (KR); Lee, Eung Sam, 151-851, SEOUL (KR); Park, Kwon II, 151-851, SEOUL (KR); Park, Si Jun, 151-851, SEOUL (KR)
(74) Representative: Vidon Brevets & Stratégie

(56) References cited:
- EP-A2- 0 059 692
- BE-A- 705 620
- DE-U1- 9 108 770
- GB-A- 704 165
- US-A- 4 700 734
- US-A1- 2005 062 283
- US-A1- 2006 048 817

## Description

### BACKGROUND OF THE INVENTION

### Field of the Invention

The present invention relates to a water storage tank according to the preamble of claim 1 capable of preventing water from flowing out through an air discharge path, which is configured to facilitate the inflow of water.

### Description of the Related Art

In general, a water storage tank is a device that stores and discharges water therein to the outside. The water storage tank may be provided with a heater or an evaporator, which is used in a freezing system. A water storage tank including a heater may be used as a warm water storage tank, while a water storage tank including an evaporator may be used as a cold water storage tank.

Such a water storage tank may have an inlet and an outlet. The inlet and the outlet are provided with an inlet pipe and an outlet pipe, respectively. Thus, water is introduced into a water storage tank through the inlet pipe, and water, stored in the water storage tank, is discharged to the outside through the outlet pipe.

In order to facilitate water flow into a water storage tank, an air discharge path, such as an air hole, is provided in the upper part of an outlet pipe placed inside the water storage tank. Through this air discharge path, air existing in the water storage tank can be discharged to the outside when water is flowing in through an inlet pipe.

Meanwhile, when a water storage tank is used at a place in which water flows in at high pressure, such as in direct type water purifiers, water stored in the water storage tank is discharged to the outside by the pressure at which water is flowing into the water storage tank (hereinafter, also referred to as water inflow pressure). Here, the direct type water purifiers refer to those that directly supply water to a purifying filter using water pressure without a pump.

However, in the case in which a water level in a water storage tank is higher than an air discharge path such as an air hole, water is undesirably discharged through the air discharge path and mixed with water being discharged through an outlet pipe by the water inflow pressure.

In this case, if the water storage tank is a cold water storage tank, water placed in the lower part of the water storage tank in which temperature is relatively low, may be discharged, mixed with water placed in the upper part of the water storage tank in which temperature is relatively high.

Consequently, water having a desired temperature may not be supplied to a user.

A prior art water storage tank is known from patent application US2005/062283A1, which discloses a tank comprising a first and a second tank-fittings, each tank-fitting interconnecting an external pipe to a tee fitting, such as a sanitary-tee fitting, said external pipes being respectively inlet and outlet pipes for the tank. Another prior art tank is also known from DE9108770U1.

### SUMMARY OF THE INVENTION

The present invention is made to address at least one of requirements or limitations of the related-art water storage tank as described above.

An aspect of the present invention is to facilitate water flow into a water storage tank.

Another aspect of the present invention is to discharge water by water inflow pressure.

Another aspect of the present invention is to prevent water from flowing out through an air discharge path at the time of discharging water stored in a water storage tank by water inflow pressure, so that water discharged through an outlet pipe does not mix with water undesirably discharged through the air discharge path.

Another aspect of the present invention is to supply water having a temperature desired by a user.

The present invention is basically associated with using two interconnected outlet pipes and forming an air discharge path between the two outlet pipes.

According to an aspect of the present invention, there is provided a water storage tank including: a tank body including an inlet and an outlet; a first outlet pipe provided in the outlet of the tank body such that one side of the first outlet pipe is placed outside the tank body while the other side thereof is placed inside the tank body; and a second outlet pipe having one side connected to the other side of the first outlet pipe such that air or water existing in the tank body is discharged to the outside.

The other side of the first outlet pipe is inserted into the one side of the second outlet pipe to form a first gap with respect to the second outlet pipe, and the one side of the second outlet pipe forms a second gap with respect to the tank body, thereby forming an air discharge path.

The other side of the first outlet pipe may be placed in the upper part of the tank body, and the other side of the second outlet pipe may be placed in the lower part of the tank body.

The first outlet pipe and the second outlet pipe may be connected together by spot-welding.

The water storage tank may further include an evaporator placed inside or outside the tank body and cooling water received in the tank body.

The water storage tank may further include an inlet pipe placed in the inlet and having a J-shape.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a cross-sectional view illustrating a water storage tank according to an exemplary embodiment of the present invention;
FIG. 2A is an enlarged cross-sectional view illustrating a water discharge structure of a water storage tank according to an exemplary embodiment of the present invention;
FIG. 2B is a cross-sectional view taken along line A-A' of FIG. 2A; and
FIGS. 3 through 6 are cross-sectional views illustrating the operation of a water storage tank being used as a cold water storage tank, according to an exemplary embodiment of the present invention.

### DETAILED DESCRIPTION OF THE PREFERRED EMBODIMENT

Exemplary embodiments of the present invention will now be described in detail with reference to the accompanying drawings.

The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, like reference numerals refer to like elements throughout.

Exemplary embodiments of the present invention are basically associated with using two interconnected outlet pipes and having an air discharge path formed between the two outlet pipes.

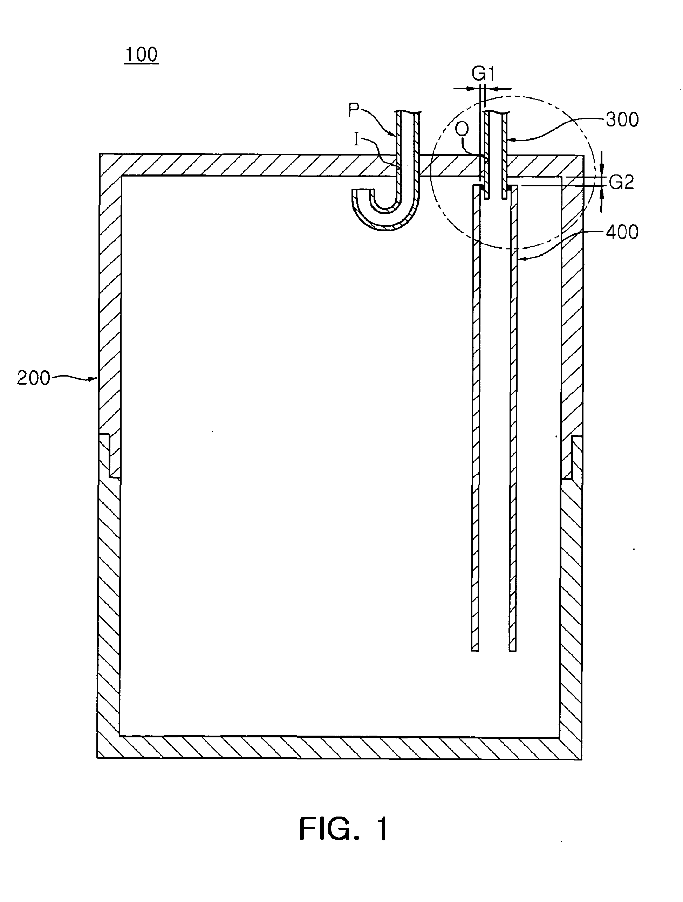

As in an exemplary embodiment depicted in FIG. 1, a water storage tank 100 may include a tank body 200, a first outlet pipe 300, and a second outlet pipe 400.

As in the exemplary embodiment depicted in FIG. 1, the tank body 200 may include an inlet I and an outlet O. An inlet pipe P may be provided in the inlet I of the tank body 200 as shown therein. Water can flow into the tank body 200 through the inlet pipe P. As shown therein, the inlet pipe P may have a "J" shape. In the case in which the inlet pipe P has a "J" shape, water flowing in through the inlet pipe P may not immediately mix with water 'W' already existing in the tank body 200. This may ensure less variation in the temperature of water 'W' existing in the tank body 200. Accordingly, the temperature control upon water 'W' existing in the tank body 200 may be facilitated. Furthermore, a first outlet pipe 300 may be provided in the outlet O of the tank body 200, as will be described below. A second outlet pipe 400 is connected to the first outlet pipe 300, thereby discharging water 'W', stored in the tank body 200, to the outside.

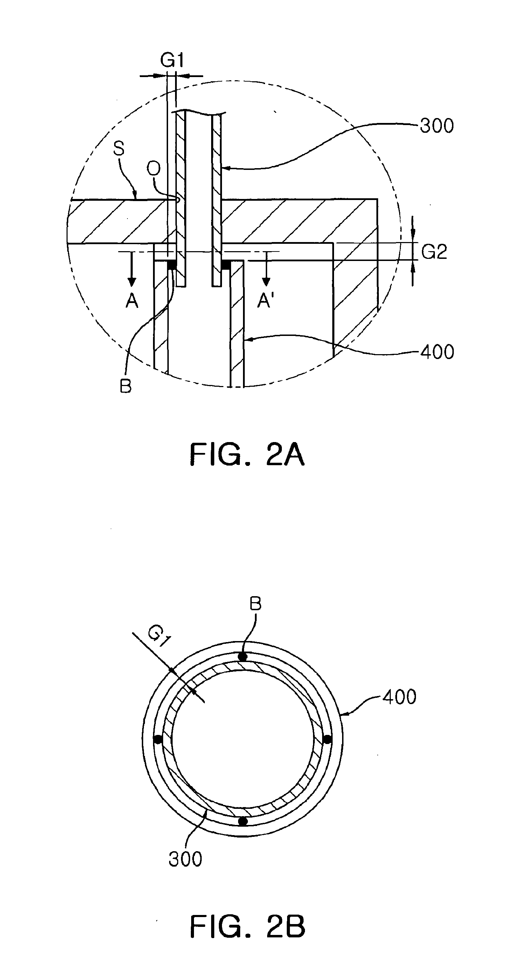

As in an embodiment depicted in FIGS. 1 and 2, the first outlet pipe 300 may be provided in the outlet O of the tank body 200. One side of the first outlet pipe 300 may be placed outside the tank body 200 as in the illustrated embodiment. Furthermore, the other side of the first outlet pipe 300 may be placed inside the tank body 200. The other side of the first outlet pipe 300 may be placed in the upper part of the tank body 200.

As in the embodiment depicted in FIGS. 1 and 2, one side of the second outlet pipe 400 may be connected to the other side of the first outlet pipe 300. Thus, water 'W' or air 'A' existing in the water tank 200 may be discharged to the outside of the tank body 200 through the second outlet pipe 400 and the first outlet pipe 300.

As in the embodiment depicted in FIGS. 1 and 2, the other side of the first outlet pipe 300 may be inserted into the one side of the second outlet pipe 400 to thereby create a first gap G1 with respect to the second outlet pipe 400. Furthermore, the one side of the second outlet pipe 400 may create a second gap G2 with respect to the tank body 200. These first gap G1 and second gap G2 may form a path through which the air 'A' flows out (i.e., an air discharge path).

To this end, the first outlet pipe 300 and the second outlet pipe 400 may be subjected to spot-welding to thereby be connected together. For example, a welded portion B may be formed in such a location as in the embodiment shown in FIG. 2A and 2B by the spot welding, and accordingly, the first outlet pipe 300 and the second outlet pipe 400 are connected to each other so as to form an air discharge path. However, the method for connecting the first and second outlet pipes 300 and 400 is not limited to the spot-welding, but any method may be used provided that it forms a connection structure that allows for the discharge of air 'A'or water 'W' from the tank body 200 and forms a discharge path for the air 'A' in such a way that the other side of the first outlet pipe 300 is inserted into one side of the second outlet pipe 400 to thereby form a first gap G1 with respect to the second outlet pipe 400 and the one side of the second outlet pipe 400 forms a second gap G2 with respect to the tank body 200.

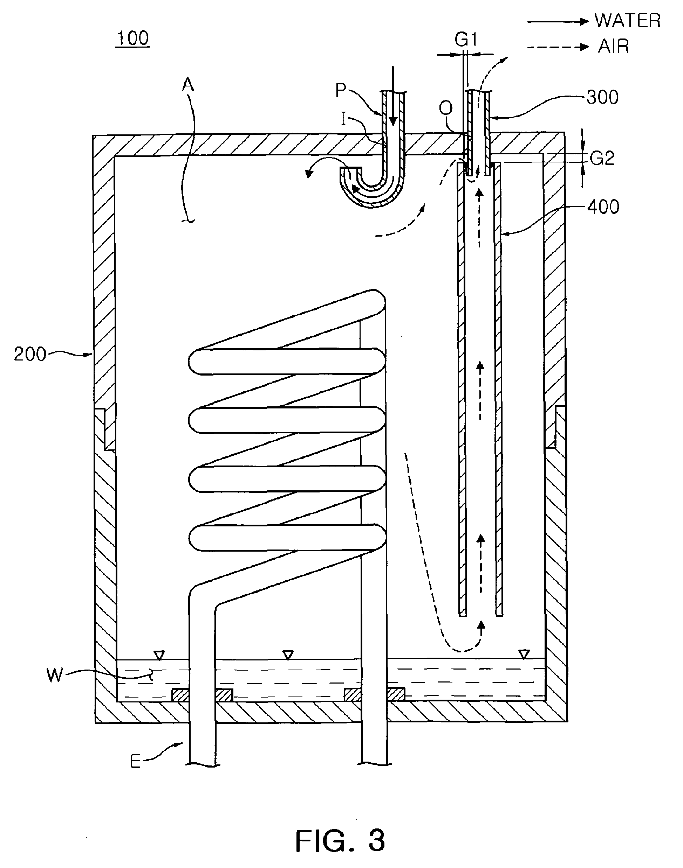

Accordingly, as shown in FIG. 3, when water flows in through the inlet pipe P provided in the inlet I of the tank body 200, the structure as described above allows air 'A' in the tank body 200 to be introduced into the other side of the second outlet pipe 400, namely, the lower end of the second outlet pipe 400 and then be discharged through the first outlet pipe 300. Furthermore, as shown in the drawing, air 'A' in the tank body 200 may be introduced into the other side of the first outlet pipe 300, namely, the lower end of the first outlet pipe 300, through the second gap G2 and the first gap G1 and then be discharged to the outside.

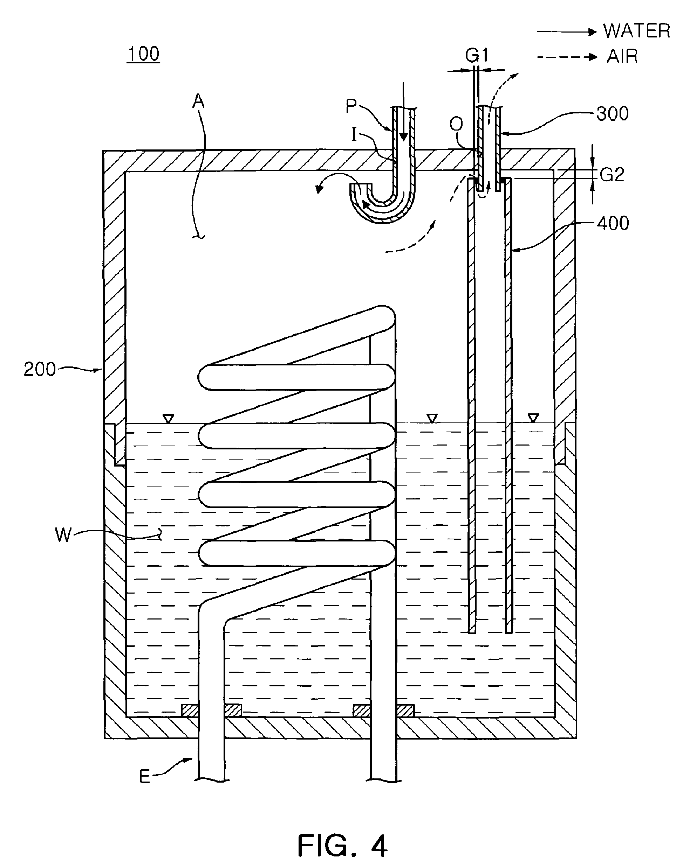

In the case in which water continues to flow into the tank body and reaches a point at which a level of water 'W' stored in the water storage tank 100 exceeds the end portion of the other side of the second outlet pipe 400, namely, the lower end thereof as shown in FIG. 4, air 'A' in the tank body 200 is introduced into the first outlet pipe 300 only through the second gap G2 and the first gap G1, thereby being discharged to the outside. This facilitates the flow of water into the tank body 200.

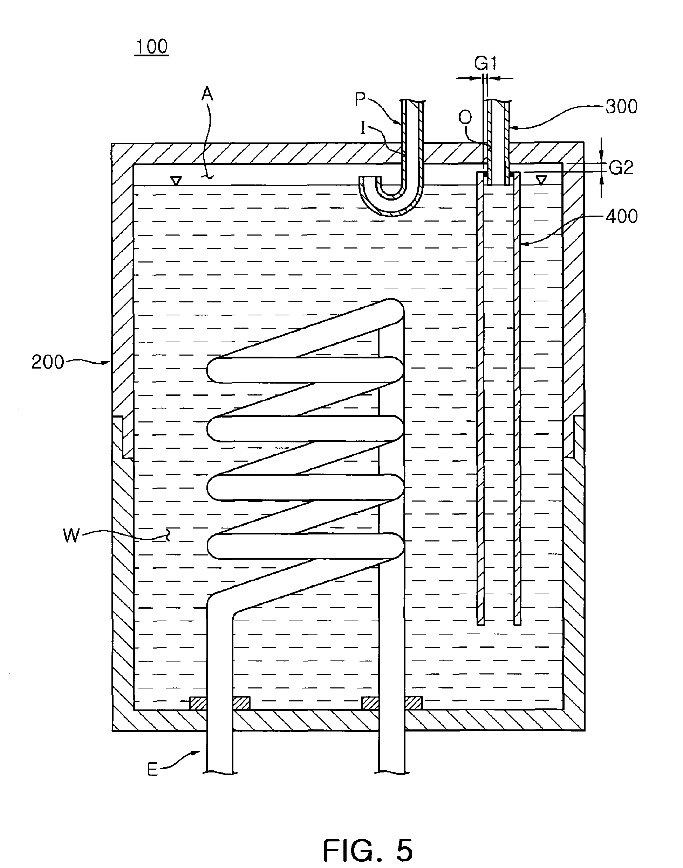

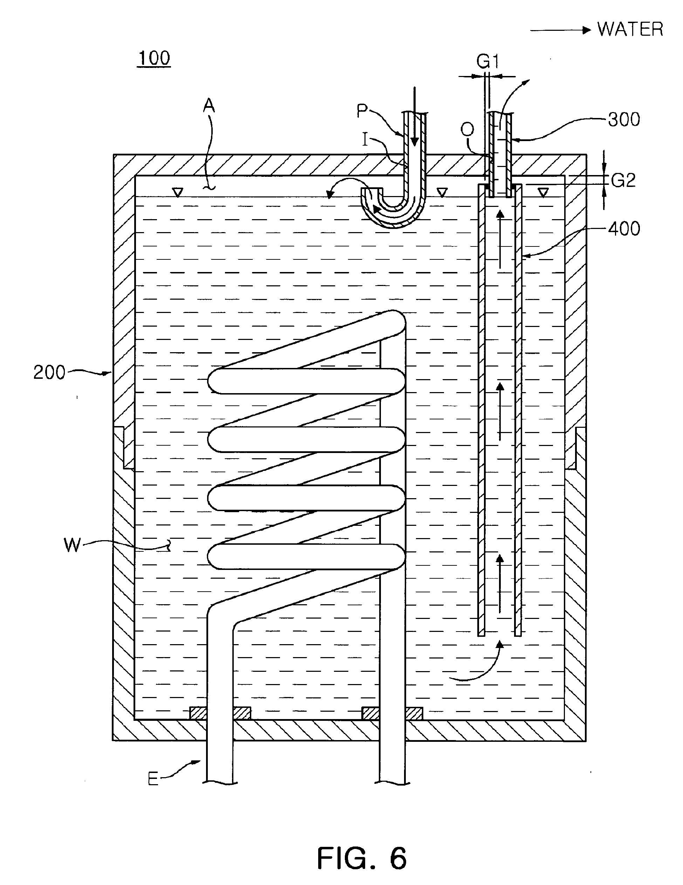

Thereafter, in the case in which water flows further into the tank body 200 and thus reaches a point at which a level of water 'W' stored in the tank body 200 exceeds the end portion of the other side of the first outlet pipe 300, namely, the lower end thereof as shown in FIG. 5, the first gap G1 is blocked by the water 'W' in the tank body 200. In this case, air 'A' in the tank body 200 can no longer be discharged to the outside even though water is introduced into the tank body 200. Therefore, when water flows into the tank body 200 through the inlet pipe P in the above-mentioned state, water 'W' stored in the tank body 200 is discharged to the outside through the second outlet pipe 400 and the first outlet pipe 300 by water inflow pressure as shown in FIG. 6. At this time, a level of water W stored in the tank body 200 no longer increases, nor exceeds the water level shown in FIGS. 5 and 6.

Accordingly, while water 'W' is discharged to the outside through the second outlet pipe 400 and the first outlet pipe 300 by the water inflow pressure, water 'W' is prevented from being introduced directly into the first outlet pipe 300 through the second gap G2 and the first gap G1 and being discharged to the outside. That is, since the other side of the first outlet pipe 300 is placed in the upper part of the tank body 200 as described above, water 'W' placed in the upper part of the tank body 200 is prevented from being introduced into and discharged through the first outlet pipe 300 via the second gap G2 and the first gap G1. Consequently, water 'W' in the upper part of the tank body 200 does not mix with water being discharged to the outside through the second outlet pipe 400 and the first outlet pipe 300 by water inflow pressure.

Furthermore, the internal pressure of the tank body 200 is greater than the external pressure thereof due to the water inflow pressure. For this reason, water 'W', having been discharged to the outside through the second outlet pipe 400 and the first outlet pipe 300 by the water inflow pressure, does not flow back into the tank body 200 through the first gap G1 and the second gap G2.

Meanwhile, as in the embodiment depicted in FIGS. 1 and 2, the other side of the second outlet pipe 400 may be placed in the lower part of the tank body 200. Accordingly, when water 'W' in the tank body 200 is discharged to the outside through the second outlet pipe 400 and the first outlet pipe 300 by the water inflow pressure as shown in FIG. 6, a portion of water 'W' placed in the lower part of the tank body 200 may thus be discharged first to the outside. Also, as described above, a portion of water 'W' placed in the upper part of the tank body 200 is not introduced into the first outlet pipe 300 through the second gap G2 and the first gap G1 and thus not discharged to the outside. Thus, a portion of water 'W' placed in the lower part of the tank body 200 may be discharged out of the tank body 200 through the second outlet pipe 400 and the first outlet pipe 300, without mixing with water existing in the upper part of the tank body 200.

Hereinafter, the operation of the water storage tank 100, according to an exemplary embodiment of the present invention, will be described in detail with reference to FIGS. 3 through 6. In this embodiment, the water storage tank 100 is exemplified as a cold water storage tank including an evaporator E in the tank body 200.

First, as shown in FIG. 3, when water 'W' flows into the tank body 200 through the inlet pipe P provided at the water storage tank 100, air 'A' existing in the tank body 200 is introduced into the first outlet pipe 300 via the second outlet pipe 400 or via the second gap G2 and the first gap G1, and then discharged to the outside. Accordingly, water can be easily flow into the tank body 200.

As shown in the drawing, water 'W' having flowed into the tank body 200 is stored in the tank body 200 and thereby increases a water level within the tank body 200. In addition, if a freezing system (not shown) is driven to circulate a cold refrigerant within the evaporator E, water 'W' stored in the tank body 200 is cooled down and becomes cold water.

As shown in FIG. 4, as the flow of water into the tank body 200 proceeds and a water level within the tank body 200 exceeds the end portion of the other side of the second outlet pipe 400, namely, the lower end thereof, air 'A' existing in the tank body 200 is discharged out of the tank body 200 only through the second gap G2 and the first gap G1.

Subsequently, as shown in FIG. 5, as water flows further into the tank body 200 and reaches the end portion of the other side of the first outlet pipe 300, namely, the lower end thereof, water 'W' stored in the tank body 200 blocks the end portion of the other side of the first outlet pipe 300. Even if more water flows into the tank body 200 thereafter, air 'A' in the tank body 200 is no longer discharged to the outside.

As shown in FIG. 6, as the flow of water into the tank body 200 further proceeds in the above state, water 'W' stored in the tank body 200 and cooled by the evaporator E is discharged to the outside of the tank body 200 through the second outlet pipe 400 and the first outlet pipe 300 by water inflow pressure. At this time, a portion of water 'W' placed in the upper part of the tank body 200 and having a relatively high temperature is prevented from being introduced into the first outlet pipe 300 since a level of water 'W' stored in the tank body 200 does not ever go beyond the end portion of the one side of the second outlet pipe 400, namely, the upper end thereof. Therefore, a portion of water 'W' placed in the lower part of the tank body 200 and having a relatively low temperature is discharged first to the outside of the tank body 200 without mixing with a portion of water 'W' placed in the upper part of the tank body 200 and having a relatively high temperature.

Furthermore, the internal pressure of the tank body 200 is higher than the external pressure of the tank body 200 due to the water inflow pressure. For this reason, a portion of water 'W', placed in the lower part of the tank body 200 at a relatively low temperature and discharged out of the tank body 200 through the second outlet pipe 400 and the first outlet pipe 300, does not flow back to the tank body through the first gap G1 and the second gap G2.

In the above manner, water 'W' having a temperature desired by a user can be supplied.

The use of the water storage tank 100 according to the exemplary embodiments of the present invention may facilitate the flow of water into the water storage tank, and allow water to be discharged by water inflow pressure. Furthermore, when water stored in the water storage tank is discharged to the outside by water inflow pressure, water is prevented from being discharged through an air discharge path, and thus the undesired mixing of water from an air discharge path with water from an outlet pipe can be obviated.

Accordingly, water having a temperature desired by a user may be provided.

As set forth above, according to exemplary embodiments of the invention, the flow of water into a water storage tank can be facilitated.

According to exemplary embodiments of the invention, water can be discharged by water inflow pressure.

Furthermore, according to exemplary embodiments of the invention, when water stored in the water storage tank is discharged to the outside by water inflow pressure, water is prevented from being discharged through an air discharge path, thereby preventing water from an outlet pipe from mixing with water from the air discharge path.

In addition, according to exemplary embodiments of the invention, water having a temperature desired by a user can be provided.

## Claims

1. A water storage tank (100) comprising:
a tank body (200) including an inlet (I) and an outlet (O);
a first outlet pipe (300) provided in the outlet (O) of the tank body (200) such that one side of the first outlet pipe (300) is placed outside the tank body (200) while the other side thereof is placed inside the tank body (200); and
a second outlet pipe (400) having one side connected to the other side of the first outlet pipe (300) such that air or water existing in the tank body (200) is in use discharged to the outside;
**characterized in that** the other side of the first outlet pipe (300) is inserted into the one side of the second outlet pipe (400) to form a first gap (G1) with respect to the second outlet pipe (400), and the one side of the second outlet pipe (400) forms a second gap (G2) with respect to the tank body (200), thereby forming an air discharge path.

2. The water storage tank (200) of claim 1, wherein the other side of the first outlet pipe (300) is placed in the upper part of the tank body (200), and the other side of the second outlet pipe (400) is placed in the lower part of the tank body (200).

3. The water storage tank (200) of claim 1, wherein the first outlet pipe (300) and the second outlet pipe (400) are connected by spot-welding.

4. The water storage tank (200) of claim 1, further comprising an evaporator (E) placed inside or outside the tank body (200) and cooling water received in the tank body (200).

5. The water storage tank (200) of claim 1, further comprising an inlet pipe (P) placed in the inlet (I) and having a "J"-shape.

## Patentansprüche

1. Wasserspeicherbehälter (100), der aufweist:
einen Behälterhauptteil (200), der einen Einlass (I) und einen Auslass (O) umfasst;
eine erste Auslassleitung (300), die in dem Auslass (O) des Behälterhauptteils (200) bereitgestellt wird, sodass eine Seite der ersten Auslassleitung (300) außerhalb des Behälterhauptteils (200) angestellt ist, während deren andere Seite innerhalb des Behälterhauptteils (200) angestellt ist; und
eine zweite Auslassleitung (400) mit einer Seite, die mit der anderen Seite der ersten Auslassleitung (300) verbunden ist, sodass Luft oder Wasser vorhanden in dem Behälterhauptteil (200) bei Verwendung nach außen entlassen wird;
**dadurch gekennzeichnet, dass** die andere Seite der ersten Auslassleitung (300) in die eine Seite der zweiten Auslassleitung (400) eingefügt ist, um eine erste Unterbrechung (G1) bezogen auf die zweite Auslassleitung (400) zu bilden, und dass die eine Seite der zweiten Auslassleitung (400) eine zweite Unterbrechung hinsichtlich des Behälterhauptteils (200) bildet, wodurch ein Luftentlassungsweg gebildet wird.

2. Wasserspeicherbehälter (200) nach Anspruch 1, wobei die andere Seite der ersten Auslassleitung (300) im oberen Teil des Behälterhauptteils (200) angestellt ist und die andere Seite der zweiten Auslassleitung (400) im unteren Teil des Behälterhauptteils (200) angestellt ist.

3. Wasserspeicherbehälter (200) nach Anspruch 1, wobei die erste Auslassleitung (300) und die zweite Auslassleitung (400) durch Punktschweißen verbunden sind.

4. Wasserspeicherbehälter (200) nach Anspruch 1, der weiter einen Evaporator (E), der innerhalb oder außerhalb des Behälterhauptteils (200) angestellt ist und Kühlwasser aufweist, das im Behälterhauptteil (200) aufgenommen ist.

5. Wasserspeicherbehälter (200) nach Anspruch 1, der weiter eine Einlassleitung (P) aufweist, die in dem Einlass (I) angestellt ist und eine "J"-Form hat.

## Revendications

1. Réservoir de stockage d'eau (100) comprenant :
un réservoir d'eau (200) incluant une entrée (I) et une sortie (O) ;
un premier tuyau de sortie (300) prévu dans la sortie (O) du corps du réservoir (200) de telle sorte qu'un côté du premier tuyau de sortie (300) soit placé à l'extérieur du corps de réservoir (200) alors que l'autre côté de celui-ci est placé à l'intérieur du corps de réservoir (200) ; et
un second tuyau de sortie (400) dont un côté est raccordé à l'autre côté du premier tuyau de sortie (300) de telle sorte que l'air ou l'eau existant dans le corps de réservoir (200) soit en évacué vers l'extérieur lors de l"utilisation;
**caractérisé en ce que** l'autre côté du premier tuyau de sortie (300) est inséré dans ledit côté du second tuyau de sortie (400) pour former un premier espace (G1) par rapport au second tuyau de sortie (400), et ledit côté du second tuyau de sortie (400) forme un second espace (G2) par rapport au corps de réservoir (200), formant ainsi un trajet d'évacuation d'air.

2. Réservoir de stockage d'eau (200) selon la revendication 1, dans lequel l'autre côté du premier tuyau de sortie (300) est placé dans la partie supérieure du corps de réservoir (200), et l'autre côté du second tuyau de sortie (400) est placé dans la partie inférieure du corps de réservoir (200).

3. Réservoir de stockage d'eau (200) selon la revendication 1, dans lequel le premier tuyau de sortie (300) et le second tuyau de sortie (400) sont raccordés par soudage par points.

4. Réservoir de stockage d'eau (200) selon la revendication 1, comprenant en outre un évaporateur (E) placé à l'intérieur ou à l'extérieur du corps de réservoir (200) et refroidissant l'eau reçue dans le corps de réservoir (200).

5. Réservoir de stockage d'eau (200) selon la revendication 1, comprenant en outre un tuyau d'entrée (P) placé dans l'entrée (I) et ayant une forme en « J ».
